(19) Europäisches Patentamt
European Patent Office
Office européen des brevets

(11) EP 3 174 937 B2

(12) **NEW EUROPEAN PATENT SPECIFICATION**
After opposition procedure

(45) Date of publication and mention of the opposition decision:
**11.06.2025 Bulletin 2025/24**

(45) Mention of the grant of the patent:
**27.03.2019 Bulletin 2019/13**

(21) Application number: **15747187.1**

(22) Date of filing: **29.07.2015**

(51) International Patent Classification (IPC):
***C08L 71/12*** *(2006.01)* ***C08L 81/06*** *(2006.01)*
***C08G 65/40*** *(2006.01)* ***C08L 71/00*** *(2006.01)*
***C08G 75/23*** *(2006.01)*

(52) Cooperative Patent Classification (CPC):
(C-Sets available)
**C08L 71/00; C08G 65/4012; C08G 65/4018; C08G 65/4025;** C08G 2650/40; C08L 2205/02
(Cont.)

(86) International application number:
**PCT/GB2015/052187**

(87) International publication number:
**WO 2016/016643 (04.02.2016 Gazette 2016/05)**

(54) **POLYMERIC MATERIALS**
POLYMERE MATERIALIEN
MATÉRIAUX POLYMÉRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2014 GB 201413489**

(43) Date of publication of application:
**07.06.2017 Bulletin 2017/23**

(73) Proprietor: **Victrex Manufacturing Limited**
**Cleveleys, Lancashire FY5 4QD (GB)**

(72) Inventors:
- **CHAPLIN, Adam**
**Poulton-le-Fylde**
**Lancashire FY6 7QT (GB)**
- **CAPRA, Carlo**
**64347 Griesheim (DE)**

(74) Representative: **Gurun, Lara et al**
**Victrex Manufacturing Limited**
**Intellectual Property Department**
**Victrex Technology Centre**
**Hillhouse International**
**Thornton Cleveleys FY5 4QD (GB)**

(56) References cited:
**EP-A1- 2 738 219**
**EP-A2- 0 184 458**
**EP-A2- 0 184 458**
**EP-A2- 0 225 750**
**WO-A1-2015/019047**
**WO-A1-2015/198063**
**WO-A1-85/01510**
**US-A- 4 942 216**
**US-A1- 2014 072 739**
**US-B2- 8 663 542**

EP 3 174 937 B2

(52) Cooperative Patent Classification (CPC): (Cont.)

C-Sets
**C08L 71/123, C08L 81/06**

## Description

This invention relates to polymeric materials and particularly, although not exclusively, relates to blends comprising a polyaryletherketone, for example polyetheretherketone (PEEK).

PEEK is a very well-known high performance thermoplastic polymer. It has excellent mechanical and chemical resistance properties. For example, it has high fracture toughness and a high level of crystallinity. However, for some applications, it is desirable to provide a material which has improved fracture toughness while still maintaining a high level of crystallinity. It is an object of the present invention to address this problem.

US4942216 discloses polyaryl ether ketones having improved processibility. EP0184458 discloses thermoplastic aromatic polyetherketones and processes for the production thereof. US8663542 discloses a thermoplastic resin composition of which the molding efficiency can be improved by a high flowability and a high crystallization temperature. US2014072739 discloses a polyaryletherketone polymeric material, for example polyetheretherketone and composite materials comprising said polymeric material

According to a first aspect of the invention, there is provided a component which is injection moulded or extruded from a blend comprising thermoplastic polymers in the absence of filler to form an injection moulded or extruded component consisting essentially of the blend. The component is according to claim 1.

Advantageously, the blend is found to exhibit high fracture toughness in combination with high crystallinity. Furthermore, advantageously, the melting temperature (Tm) is less than that of polymeric material (B); the glass transition temperature (Tg) is higher than for polymeric material (B) and the crystallisation temperature (Tc) is lower than for polymeric material (B).

Said polymeric material (A) is preferably semi-crystalline. A skilled person can readily assess whether a polymer is semi-crystalline, for example, by wide angle X-ray diffraction (also referred to as Wide Angle X-ray Scattering or WAXS) or by Differential Scanning Calorimetry (DSC).

In polymeric material (A), said repeat units I and II are preferably in the relative molar proportions I:II of from 50:50 to 95:5, more preferably of from 60:40 to 95:5, most preferably of from 65:35 to 95:5, e.g. 75:25.

Preferably, in said polymeric material (A), the following relationship applies:

$$\log_{10} (X\%) > 1.50 - 0.26 \text{ MV};$$

wherein X% refers to the % crystallinity measured as described in Example 4 and MV refers to the melt viscosity measured as described in Example 3 at 340°C.

The phenylene moieties (Ph) in each repeat unit I and II may independently have 1,4-para linkages to atoms to which they are bonded or 1,3- meta linkages. Where a phenylene moiety includes 1,3- linkages, the moiety will be in the amorphous phase of the polymer. Crystalline phases will include phenylene moieties with 1,4- linkages. In many applications it is preferred for the polymeric material (C) to be highly crystalline and, accordingly, the polymeric material (C) preferably includes high levels of phenylene moieties with 1,4- linkages.

In a preferred embodiment, at least 95%, preferably at least 99%, of the number of phenylene moieties (Ph) in the repeat unit of formula I have 1,4-linkages to moieties to which they are bonded. It is especially preferred that each phenylene moiety in the repeat unit of formula I has 1,4- linkages to moieties to which it is bonded.

In a preferred embodiment, at least 95%, preferably at least 99%, of the number of phenylene moieties (Ph) in the repeat unit of formula II have 1,4-linkages to moieties to which they are bonded. It is especially preferred that each phenylene moiety in the repeat unit of formula II has 1,4- linkages to moieties to which it is bonded.

Preferably, the phenylene moieties in repeat unit of formula I are unsubstituted. Preferably, the phenylene moieties in repeat unit of formula II are unsubstituted.

Said repeat unit of formula I suitably has the structure

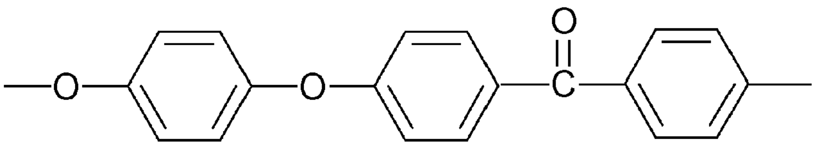

III.

Said repeat unit of formula II suitably has the structure

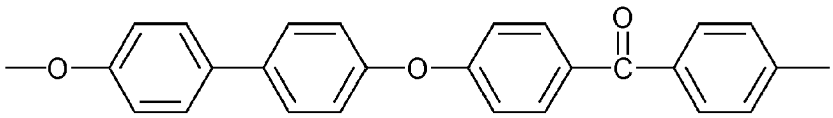

IV.

Said polymeric material (A) may include at least 50 mol%, preferably at least 60 mol%, of repeat units of formula III. Particular advantageous polymers may include at least 62 mol%, or, especially, at least 64 mol% of repeat units of formula III. Said polymeric material (A) may include less than 90 mol%, suitably 82 mol% or less of repeat units of formula III. Said polymeric material (A) may include 58 to 82 mol%, preferably 60 to 80 mol%, more preferably 62 to 77 mol% of units of formula III.

Said polymeric material (A) may include at least 10 mol%, preferably at least 18 mol%, of repeat units of formula IV. Said polymeric material (A) may include less than 42 mol%, preferably less than 39 mol% of repeat units of formula IV. Particularly advantageous polymers may include 38 mol% or less; or 36 mol% or less of repeat units of formula IV. Said polymeric material (A) may include 18 to 42 mol%, preferably 20 to 40 mol%, more preferably 23 to 38 mol% of units of formula IV.

The sum of the mol% of units of formula III and IV in said polymeric material (A) is suitably at least 95 mol%, is preferably at least 98 mol%, is more preferably at least 99 mol% and, especially, is about 100mol%.

The ratio defined as the mol% of units of formula III divided by the mol% of units of formula IV may be in the range 1.8 to 5.6, is suitably in the range 2.3 to 4 and is preferably in the range 2.6 to 3.3.

The Tm of said polymeric material (A) may be less than 330°C, is suitably less than 320°C, is preferably less than 310°C. In some embodiments, the Tm may be less than 306°C. The Tm may be greater than 280°C, or greater than 290°C, 295°C or 300°C. The Tm is preferably in the range 300°C to 310°C.

In a preferred embodiment, said polymeric material (A) has a Tg in the range 145°C-155°C, a Tm in the range 300°C to 310°C and the difference between the Tm and Tg is in the range 145°C to 165°C.

Said polymeric material (A) may have a crystallinity measured as described in Example 4 of at least 5%, preferably at least 10%, more preferably at least 15%, even more preferably at least 20%, even more preferably at least 23%. The crystallinity measured by WAXS (as described by Blundell and Osborn, supra) may also be at least 23%.

Said polymeric material (A) suitably has a melt viscosity (MV) (measured as described in Example 3 at 400°C) of at least 0.06 $kNsm^{-2}$, preferably has a MV of at least 0.09 $kNsm^{-2}$, more preferably at least 0.12 $kNsm^{-2}$ , especially at least 0.15 $kNsm^{-2}$.

The level of crystallinity in said polymeric material (B) (measured as described in Example 4 or by WAXS as described) may be at least 15%, suitably at least 20%, preferably at least 25% and, more preferably, at least 30%. In especially preferred embodiments, the crystallinity may be greater than 30%, more preferably greater than 35%. The level of crystallinity may be less than 60%.

Said polymeric material (B) has a repeat unit wherein t1=1, v1=0 and w1=0.

Polymeric material (B) suitably includes at least 50 mol%, (e.g. 50-100 mol%), preferably at least 60 mol% (e.g. 60-100 mol%), more preferably at least 80 mol% (e.g. 80 to 100 mol%), of repeat units of formula XX, especially such units where t1=1, v1=0 and w1=0.

Polymeric material (B) suitably includes at least 50 wt% (e.g. 50-100 wt%) of repeat units of formula XX.

Polymeric material (B) preferably consists essentially of a repeat unit of a formula XX, especially such a repeat unit wherein t1=1, v1=0 and w1=0.

Said polymeric material (B) is polyetheretherketone.

Said polymeric material (B) preferably has a melt viscosity (MV) measured as described in Example 3 at 400°C of at least 0.06 $kNsm^{-1}$, preferably has a MV of at least 0.08 $kNsm^{-1}$, more preferably at least 0.085 $kNsm^{-1}$, especially at least 0.09 $kNsm^{-1}$. Said polymeric material (B) may have a MV of less than 1.00 $kNsm^{-1}$, suitably less than 0.8 $kNsm^{-1}$.

The difference between the MV of polymeric material (A) and polymeric material (B) (both being measured as described in Example 3 at 400°C) is preferably less than 0.3 $kNsm^{-1}$, more preferably less than 0.15 $kNsm^{-1}$.

The blend comprising polymeric material (A) and polymeric material (B) may have a crystallinity measured by one or both of the Example 4 method or WAXS as described of at least 30% or at least 33%.

The polymeric material (A) and the polymeric material (B) suitably define a combination (which is preferably a substantially homogenous mixture) which exhibits a single Tm and/or a single Tg.

In the blend, the difference between the Tm and Tg may be in the range 155°C to 185°C.

In the blend, the Tm is preferably less than 335°C. It may be in the range 310°C to 335°C.

In the blend, the Tg is preferably greater than 148°C. It may be in the range 149°C to 158°C.

Said blend referred to preferably consists essentially of thermoplastic polymers, for example polymeric material (A) and polymeric material (B) and optional further thermoplastic polymer(s).

Said blend may include a polymeric material (C) having a repeat unit of formula

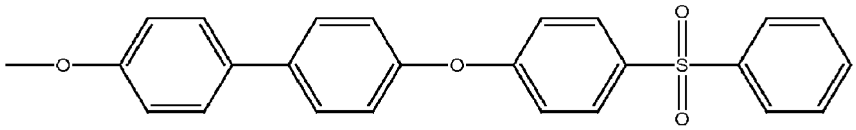

XV

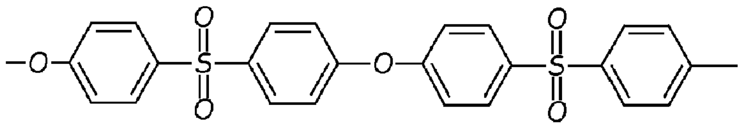

XVI

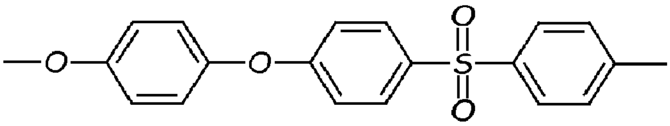

XVII

or

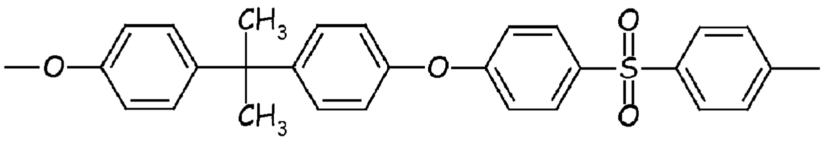

XVIII.

Said polymeric material (C) may include at least 75 mol%, preferably at least 90 mol%, more preferably at least 99 mol%, especially at least 100 mol% of repeat units of formula XV, XVI, XVII or XVIII.

Said polymeric material (C) may include at least 75 mol%, preferably at least 90 mol%, more preferably at least 99 mol%, especially at least 100 mol% of repeat units of formula XV, XVI, XVII or XVIII.

Said polymeric material (C) may be a homopolymer or a copolymer, for example a random or block copolymer. When polymeric material (C) is a copolymer, it may include more than one repeat unit selected from XV, XVI, XVII and XVIII.

In a preferred embodiment, polymeric material (C) includes said repeat unit of formula XV.

Said polymeric material (C) may have a melt flow rate (MFR) equal to or higher than 5 g/10 min at 365°C and under a load of 5.0 kg, preferably equal to or higher than 10 g/10 min at 365°C and under a load of 5.0 kg, more preferably equal to or higher than 14 g/10 min at 365°C and under a load of 5.0 kg, as measured in accordance with ASTM method D1238 ; to measure said melt flow rate, a Tinius Olsen Extrusion Plastometer melt flow test apparatus can be used.

The blend comprises thermoplastic polymers in the absence of filler. Pellets or granules are provided comprising said blend. Said pellets or granules comprise at least 99 wt% of thermoplastic polymers, for example said polymeric material (A), said polymeric material (B) and, optionally, said polymeric material (C). Said pellets or granules include 50 to 80 wt% of polymeric material (A) and 20 to 50 wt% of polymeric material (B).

Pellets or granules may have a maximum dimension of less than 10mm, preferably less than 7.5mm, more preferably less than 5.0mm.

The component may be a pipe. Said component preferably includes at least 10g (e.g. at least 100g or at least 1kg) of said polymeric material (A) and at least 10g (e.g. at least 100g or at least 1kg) of said polymeric material (B).

When said component is a pipe, said pipe may have a wall thickness of at least 0.8mm.

Preferably said component is thick-walled pipe. In this case, said pipe may be have a wall thickness (preferably along at least 1m of the length of the pipe) of at least 5mm, especially at least 10mm. The wall thickness may be in the range of 5 to 30mm. The pipe may have a length of at least 5m, preferably at least 10m.

Any aspect of any invention described herein may be combined with any feature of any other invention or embodiment described herein *mutatis mutandis.*

Specific embodiments of the invention will now be described by way of example.

The following materials are referred to hereinafter:

VICTREX 650G - refers to a polyetheretherketone available from Victrex, UK. The polymer has an MV of 0.65 $KNsm^{-2}$ when measured as described in Example 3 at 400°C.

VICTREX 150G - refers to a polyetheretherketone available from Victrex, UK. The polymer has an MV of 0.15 $KNsm^{-2}$ when measured as described in Example 3 at 400°C.

**Example 1 - Preparation of 0.5mol polyetheretherketone (PEEK)-polyetherdiphenyletherketone (PEDEK) copolymer**

A 0.5 litre flanged flask fitted with a ground glass lid, stirrer/stirrer guide, nitrogen inlet and outlet was charged with 4,4'-diflurobenzophenone (111.29g, 0.510mol), 1,4-dihydroxybenzene (41.30g, 0.375mol), 4,4'-dihydroxydiphenyl (23.28g, 0.125mol) and diphenylsulphone (241.07g) and purged with nitrogen for 1 hour. The contents were then heated under a nitrogen blanket to 160°C to form an almost colourless solution. While maintaining a nitrogen blanket, dried sodium carbonate (53.00g, 0.5mole) and potassium carbonate (2.76g, 0.02mol), both sieved through a screen with a mesh size of 500 micrometres, were added. The temperature was raised to 185°C at 1°C/min and held for 100 minutes. The temperature was raised to 205°C at 1°C/min and held for 20 minutes. The temperature was raised to 315°C at 1°C/min and held at this temperature until the desired MV was reached as indicated by the torque rise on the stirrer. The required torque rise was determined from a calibration graph of torque rise versus MV. The reaction mixture was then poured into a foil tray, allowed to cool, milled and washed with 2 litres of acetone and then with warm water at a temperature of 40 - 50°C until the conductivity of the waste water was < 2μS. The resulting polymer powder was dried in an air oven for 12 hours at 120°C. The MV of the resulting polymer was 0.60 $kNsm^{-2}$ measured according to example 3 at 400°C and the crystallinity was 21% measured according to Example 4.

**Example 2 - Preparation of polyetheretherketone (PEEK)-polyetherdiphenyletherketone (PEDEK) copolymer**

A 300 litre vessel fitted with a lid, stirrer/stirrer guide, nitrogen inlet and outlet was charged with diphenylsulphone (125.52kg) and heated to 150°C. Once fully melted 4,4'-diflurobenzophenone (44.82kg, 205.4mol), 1,4-dihydroxybenzene (16.518kg, 150mol) and 4,4'-dihydroxydiphenyl (9.311kg, 50mol) were charged to the vessel. The contents were then heated to 160°C. While maintaining a nitrogen blanket, dried sodium carbonate (21.368kg, 201.6mol) and potassium carbonate (1.106kg, 8mol), both sieved through a screen with a mesh of 500 micrometres, were added. The D50 of the sodium carbonate was 98.7μm. The temperature was raised to 180°C at 1°C/min and held for 100 minutes. The temperature was raised to 200°C at 1°C/min and held for 20 minutes. The temperature was raised to 305°C at 1°C/min and held until desired melt viscosity was reached, as determined by the torque rise of the stirrer. The required torque rise was determined from a calibration graph of torque rise versus MV. The reaction mixture was poured via a band caster into a water bath, allowed to cool, milled and washed with acetone and water. The resulting polymer powder was dried in a tumble dryer until the contents temperature measured 112°C. The MV of the resulting polymer was 0.15 $kNsm^{-2}$ measured according to Example 3 at 400°C and the crystallinity was 29% measured according to Example 4.

**Example 3 - Determination of melt viscosity (MV) of polymer**

Unless otherwise stated, this was measured using capillary rheometry operating at 340°C or 400°C (as specified) at a shear rate of $1000s^{-1}$ using a circular cross-section tungsten carbide die, 0.5mm (capillary diameter x 3.175mm (capillary length). The MV measurement was taken 5 minutes after the polymer had fully melted, which is taken to be 5 minutes after the polymer is loaded into the barrel of the rheometer.

**Example 4 - Differential Scanning Calorimetry of Polyaryletherketones of Examples**

Crystallinity described herein may be assessed by several methods for example by density, by IR spectroscopy, by x ray diffraction or by differential scanning calorimetry (DSC). The DSC method has been used to evaluate the crystallinity that developed in the polymers from Examples 1 and 2 using a Mettler Toledo DSC1 Star system with FRS5 sensor.

The Glass Transition Temperature (Tg), the Melting Temperature (Tm) and Heat of Fusions of Melting (ΔHm) for the polymers were determined using the following DSC method.

A dried sample of each polymer was compression moulded into an amorphous film, by heating 7g of polymer in a mould at 400°C under a pressure of 50bar for 2 minutes, then quenching in cold water producing a film of dimensions 120 x120mm, with a thickness in the region of 0.20mm. An 8mg plus or minus 3mg sample of each film was scanned by DSC as follows:

| | |
|---|---|
| Step 1 | Perform and record a preliminary thermal cycle by heating the sample from 30°C to 400°C at 20°C /min. |
| Step 2 | Hold for 5 minutes. |
| Step 3 | Cool at 20°C/min to 30°C and hold for 5mins. |
| Step 4 | Re-heat from 30°C to 400°C at 20°C/min, recording the Tg, Tn, Tm, ΔHn and ΔHm. |

Tc is measured on the cooling cycle (Step 3) and is the temperature at which the crystallisation exotherm reaches a minimum.

From the DSC trace resulting from the scan in step 4, the onset of the Tg was obtained as the intersection of the lines drawn along the pre-transition baseline and a line drawn along the greatest slope obtained during the transition. The Tn was the temperature at which the main peak of the cold crystallisation exotherm reaches a maximum. The Tm was the temperature at which the main peak of the melting endotherm reached a maximum.

The Heat of Fusion for melting (ΔHm) was obtained by connecting the two points at which the melting endotherm deviates from the relatively straight baseline. The integrated area under the endotherm as a function of time yields the enthalpy (mJ) of the melting transition: the mass normalised heat of fusion is calculated by dividing the enthalpy by the mass of the specimen (J/g). The level of crystallisation (X(%)) is determined by dividing the Heat of Fusion of the specimen by the Heat of Fusion of a totally crystalline polymer, which for polyetheretherketone and for the PEEK-PEDEK copolymer is 130J/g and for the PPSU containing blend of Example 15 is 91J/g. Note that PPSU is amorphous and does not contribute to the crystallisation peak in the DSC trace. The value of 91 J/g is based on a blend containing 30 wt% of PPSU and 70 wt% of PEEK and/or PEEK-PEDEK. Thus, the Heat of Fusion is 70% x 130 J/g = 91 J/g.

**Example 5 - General procedure for preparing blends**

Blends were prepared by compounding on a Rondol 10mm Twin Screw Extruder operating with a die temperature of 360°C, barrel temperature of 340°C - 360°C and with a screw speed of 84 rpm. The polymer powders were mixed and then added to the extruder via a hopper using a 'powder' screw feed; polymer granules were obtained at a throughput of 196g per hour.

**Example 6 - General procedure for injection moulding of polymers for fracture toughness testing**

ASTM impact test bars were moulded on a Boy 12A injection moulding machine with a tool temperature of 220°C, barrel temperature of 360°C - 400°C and nozzle temperature of 400°C with a screw speed of 10mm/s. The holding pressure was 80 - 95bar.

**Example 7 - General procedure for testing fracture toughness**

Fracture toughness was measured using a 3-point bend test on an Instron 5567 tensometer with 30KN load cell according to a modified ASTM D 5045-99 test method. The test was modified such that an ASTM flex support (51mm span) and anvil were used with a crosshead speed of 100mm/min using a machine notched sample.

**Results**

Blends made using VICTREX 650G and the PEEK-PEDEK copolymer of Example 1 were tested.

Results are provided in Table 1 below.

**Table 1**

| Example No's | PEEK in PEEK/PEDEK (mol fraction) | Blend composition (wt%) | | Fracture Energy ($KJm^{-2}$) | Tg (°C) | Tm (°C) | X (%) | Tc (°C) |
|---|---|---|---|---|---|---|---|---|
| | | PEEK/PEDEK | PEEK | | | | | |
| 8* | 1.00 | 0 | 100 | 15.8 | 147 | 338 | 40 | 284 |
| | | | | | | | | |
| 9 | 0.65 | 25 | 75 | 15.9 | 151 | 333 | 34 | 278 |
| 10 | 0.65 | 50 | 50 | 17.3 | 151 | 327 | 33 | 271 |
| 11 | 0.75 | 75 | 25 | 16.5 | 155 | 315 | 36 | 251 |
| | | | | | | | | |
| 12* | 0.90 | 100 | 0 | 15.5 | 149 | 322 | 32 | 259 |
| 13* | 0.85 | 100 | 0 | 14.3 | 150 | 314 | 29 | 248 |
| 14* | 0.80 | 100 | 0 | 15.9 | 152 | 305 | 24 | 231 |
| * - refers to comparative examples | | | | | | | | |

The results show that the blends of Examples 9 to 11 exhibit both high fracture energy and high crystallinity. The combination of properties is improved compared to PEEK alone (Example 8) and PEEK-PEDEK alone (Examples 12 to 14). In addition, the Tm of the blends of Examples 9 to 11 is lower than the Tm of PEEK meaning the blends can be processed at lower temperatures. Additionally, the Tg of the blends is higher than for PEEK meaning the blends will advantageously retain mechanical properties at higher temperatures than for PEEK. Furthermore, the Tc of the blends is lower than for PEEK meaning that injection moulded parts can be made from the blends which have less in-built stress. This may make the blends advantageous for some applications, for example gears. In addition, the blend may be useful in production of thick-walled pipes, since such a pipe may be made with high crystallinity but with reduced built in stress (and so increased fracture toughness).

As an alternative to blends comprising only PEEK and the PEEK-PEDEK copolymer described in Example 9 to 11, blends may be made comprising the aforesaid and PPSU as described below.

The blends described may have wide-ranging applications where high fracture toughness and high crystallinity is required.

## Claims

1. A component which is injection moulded or extruded from a blend comprising thermoplastic polymers in the absence of filler, wherein the blend is in the form of pellets or granules, wherein the pellets or granules comprise at least 99wt% thermoplastic polymers, wherein the blend comprises:

   (i) 50 to 80 wt% of a polymeric material (A) having a repeat unit of formula

   -O-Ph-O-Ph-CO-Ph- I

   and a repeat unit of formula

   -O-Ph-Ph-O-Ph-CO-Ph- II

   wherein Ph represents a phenylene moiety; and
   (ii) 20 to 50 wt% of a polymeric material (B) having a repeat unit of formula (XX)

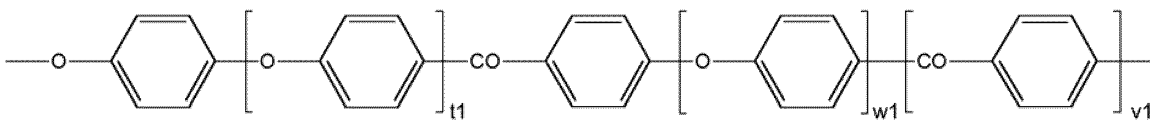

   wherein t1=1, v1=0 and w1=0;
   wherein the injection moulded or extruded component consists essentially of the blend.

## Patentansprüche

1. Eine Komponente, die aus einer Mischung aus thermoplastischen Polymeren ohne Füllstoff spritzgegossen oder extrudiert wird, wobei die Mischung in Form von Pellets oder Granulat vorliegt, wobei die Pellets oder Granulat mindestens 99 Gew.-% thermoplastische Polymere umfassen, wobei die Mischung umfaßt:

   (i) 50 bis 80 Gew.-% eines Polymermaterials (A) mit einer Wiederholungseinheit der Formel

   -O-Ph-O-Ph-CO-Ph- I

   und eine Wiederholungseinheit der Formel

   -O-Ph-Ph-O-Ph-CO-Ph- II

   wobei Ph eine Phenyleneinheit darstellt; und
   (ii) 20 bis 50 Gew.-% eines Polymermaterials (B) mit einer Wiederholungseinheit der Formel (XX)

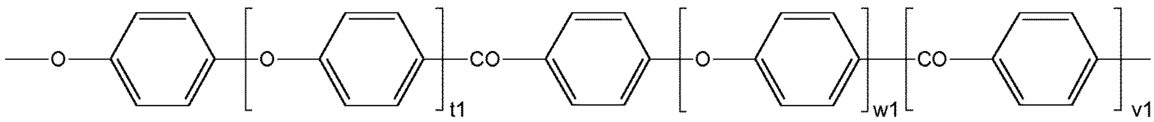

wobei t1=1, v1=0 und w1=0;
wobei die spritzgegossene oder extrudierte Komponente im Wesentlichen aus der Mischung besteht.

## Revendications

**1.** Composant moulé par injection ou extrudé à partir d'un mélange comprenant des polymères thermoplastiques en l'absence de charge, dans lequel le mélange est sous la forme de pastilles ou de granulés, dans lequel les pastilles ou granulés comprennent au moins 99 % en poids de polymères thermoplastiques, dans lequel le mélange comprend :

(i) 50 à 80 % en poids d'un matériau polymère (A) ayant un motif de répétition de formule de formule

-O-Ph-O-Ph-CO-Ph- I

et un motif de répétition de formule

-O-Ph-Ph-O-Ph-CO-Ph- II

dans laquelle Ph représente un fragment phénylène ; et
(ii) 20 à 50 % en poids d'un matériau polymère (B) comportant un motif de répétition de formule (XX)

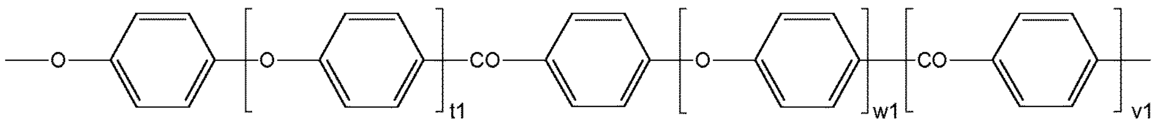

dans laquelle t1 = 1, v1 = 0 et w1 = 0 ;
dans lequel le composant moulé par injection ou extrudé est constitué essentiellement du mélange.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 4942216 A
- EP 0184458 A
- US 8663542 B
- US 2014072739 A